# EUROPEAN PATENT APPLICATION

(11) **EP 3 815 584 A1**
(43) Date of publication of application: **05.05.2021**
(21) Application number: 19208273.3
(22) Date of filing: 11.11.2019
(51) Int. Cl.: A47J 19/02, A23N 1/02

(54) **JUICER**

(30) Priority: 29.10.2019 KR 20190135495
(71) Applicant: Angel Co., Ltd., Sasang-gu Busan 46989 (KR)
(72) Inventor: LEE, Mun Hyun, 33026 Chungcheongnam-do (KR)
(74) Representative: Vossius & Partner Patentanwälte Rechtsanwälte mbB

(57) **Abstract**

The present disclosure relates to a juicer with improved juicing performance, and in particular, includes a drive part provided inside a motor housing, a roller part detachably coupled to extend forwards from the motor housing, and provided to be rotatably driven by a driving force delivered from the drive unit therein, and a sludge compressing force generating part for generating different compressing forces on a sludge before finally discharging a juicing material transferred between the outer surface of the roller part and the inner surface of the main housing, thereby largely improving a juicing rate.

## Description

### [Technical Field]

The present disclosure relates to a juicer, and more particularly, to a juicer with improved juicing performance.

### [Background Art]

In general, a juicer is a kind of juicer for green vegetable juice for extracting juice by compressing various kinds of vegetables, fruits, or the like and mainly uses a centrifugal separation method and a double gear method.

The centrifugal separation method is suitable for a juicer for extracting fruit juice such as a fruit, but there have been problems in that a vegetable, which is much in fiber and less in moisture, does not have very high juice extraction rate and discharges the residual heavy metal even if it is cut and rotated at a considerably high speed in order to extract juice.

On the other hand, the double gear method is a configuration of extracting juice by cutting and compressing the material or cutting and compressing it at the same time, and there are advantages in that the juice extraction rate is several times higher than that of the centrifugal separation method and the residual heavy metal is not eluted together in the green juice, such that the juicer of the double gear method mostly occupies the current juicer market demand.

The juicer of the double gear method includes a pair of grinding parts of a helical gear form and a pair of transfer parts of an Archimedes spiral form, and is configured by accommodating the grinding part and the transfer part in a housing in which a juice network has been formed and then coupling the housing with a drive part through a fastening part.

The pair of grinding parts is driven by the drive part to rotate while being engaged with each other, transfers it to a transfer part while cutting, grinding, and juicing the injected material, and compresses it while transferring the grinded material in the transfer part, thereby extracting the juice.

However, as the conventional juicer is provided to be compressed by the drive part and the transfer part described above at the same compressing force regardless of the type of material to be juiced, there is a problem in that a discharge rate of the sludge is different, thereby significantly decreasing the juicing rate for some materials.

### [Disclosure]

### [Technical Problem]

The present disclosure is intended to solve the above problem, and an object of the present disclosure is to provide a juicer with improved juicing performance, which may juice it at different compressing forces according to the injected material that is a target to be juiced, thereby improving a juicing rate relatively.

### [Technical Solution]

An embodiment of a juicer with improved juicing performance according to the present disclosure includes a drive part provided inside a motor housing, a roller part detachably coupled to extend forwards from the motor housing, and provided to be rotatably driven by a driving force delivered from the drive unit therein, and a sludge compressing force generating part for generating different compressing forces on a sludge before finally discharging a juicing material transferred between the outer surface of the roller part and the inner surface of the main housing.

Here, the sludge compressing force generating part may be provided on the end portion of the main housing, and provided to be formed in the edge direction of a step part formed to be stepped in a space with an extension protruded from the front end portion of the roller part to operate as the resistance against a transferring force of the sludge.

Further, the roller part may include a first gear roller connected to a drive shaft of the drive part and decreasing in outer diameter gradually toward the discharge direction of the sludge and a second gear roller connected to a driven shaft of the drive part and decreasing in outer diameter gradually toward the discharge direction of the sludge, and the sludge compressing force generating part may include any one of a compression circumferential plate extending from the main housing, and provided to cover a portion of a step surface formed by the step part of the first gear roller or the second gear roller and a compression space part formed to have the same outer diameter up to the step part as the end portion of the first gear roller or the second gear roller to decrease the compression space of the front end of the first gear roller or the second gear roller.

Further, the compression circumferential plate may be formed in all the circumferential directions along the step surface of the step part of the first gear roller or the second gear roller.

Further, the compression circumferential plate may be formed on a plurality of places to be spaced apart from a portion of the circumferential direction along the step surface of the step part of the first gear roller or the second gear roller.

Further, the compression space part may be formed between the circumferential surface of the first gear roller or the second gear roller and the front end of the main housing, and the step surface of the step part and the front end of the main housing may be positioned on the same vertical line and the mutual spacing distance may be the smallest.

Further, the compression space part may be formed between the same outer diameter circumferential surface having the same outer diameter of the first gear roller or the second gear roller and the front end of the main housing, the step surface of the step part and the front end of the main housing may be positioned on the same vertical line, and the mutual spacing distance may be the smallest.

Further, the compression space part may be open in the discharge direction of the sludge.

Further, the resistance against the discharge direction of the sludge of the compression circumferential plate may be set to be greater than the compression space part.

Further, the compression circumferential plate may be provided on both the first gear roller and the second gear roller, and the compression space part may be provided on both the first gear roller and the second gear roller.

Further, the main housing may be provided to surround the first gear roller connected to the drive shaft of the drive part and the second gear roller connected to the driven shaft of the drive part in the configuration of the roller part, and the sludge compressing force generating part may include a compression converging part formed on the inner surface of the main housing, and for decreasing a space with the outer circumferential surfaces of the first gear roller and the second gear roller toward the engaged portion of the first gear roller and the second gear roller.

### [Advantageous Effects]

According to an embodiment of the juicer with improved juicing performance according to the present disclosure, it is possible to provide the sludge compressing force generating part in the plurality of places inside the main housing, thereby further improving the juicing rate of the sludge of the juicing material.

Further, according to an embodiment of the juicer with improved juicing performance according to the present disclosure, it is possible to design to separately drive the juicing portion of the juicing material, which is much or less in fiber, according to the juicing material, thereby further improving the juicing performance.

### [Description of Drawings]

FIG. 1 is a perspective diagram illustrating an embodiment of a juicer with improved juicing performance according to the present disclosure.
FIG. 2 is a vertical cross-section diagram of FIG. 1.
FIG. 3 is an exploded perspective diagram of FIG. 1.
FIG. 4 is a perspective diagram illustrating a housing in the configuration of FIG. 1.
FIG. 5 is an external perspective diagram illustrating a juicing figure using the juicer with improved juicing performance according to the present disclosure.
FIGS. 6A and 6B are enlarged cross-sectional diagrams illustrating various embodiments of a portion "A" in FIG. 2, respectively.
FIG. 7 is a portion of a front cross-sectional diagram of the portion "A" in FIG. 2.

### [Best Mode]

Hereinafter, an embodiment of a juicer with improved juicing performance according to the present disclosure will be described in detail with reference to the accompanying drawings.

In adding reference numerals to the components of each drawing, it should be noted that the same components are denoted by the same reference numerals as possible even though they are illustrated in different drawings. Further, in describing embodiments of the present disclosure, if it is determined that the detailed description of the related well-known configuration or function interferes with the understanding of the embodiments of the present disclosure, the detailed description thereof will be omitted.

In describing the components of the embodiments of the present disclosure, terms such as first, second, A, B, (a), and (b) may be used. These terms are only to distinguish the components from other components, and the nature, order, sequence, and the like of the corresponding component are not limited by the terms. Further, unless otherwise defined, all terms used herein, including technical or scientific terms, have the same meaning as commonly understood by those skilled in the art to which the present disclosure pertains. Terms such as those defined in the commonly used dictionaries should be construed as having meanings consistent with the meanings in the context of the related art, and shall not be construed in ideal or excessively formal meanings unless expressly defined in this application.

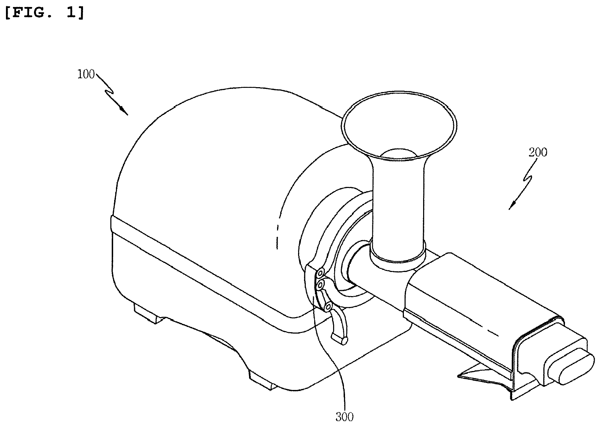

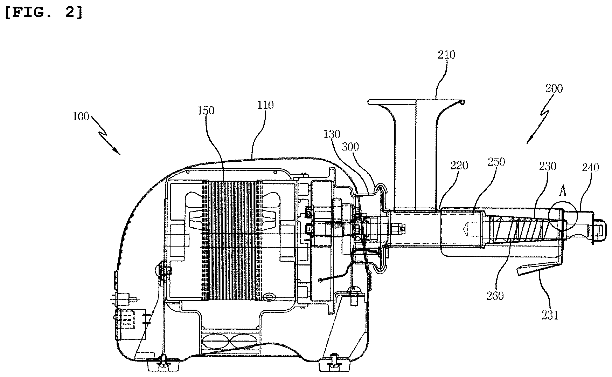

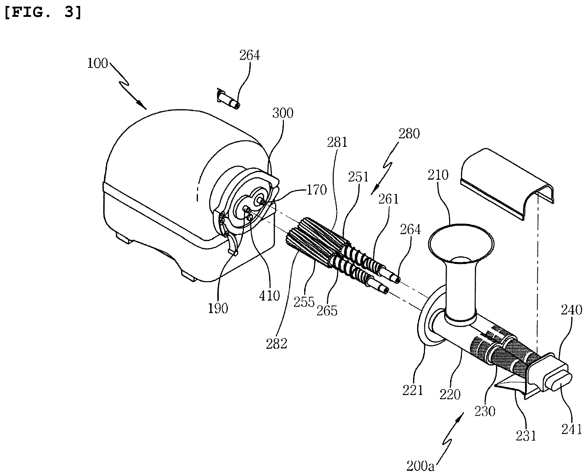

FIG. 1 is a perspective diagram illustrating an embodiment of a juicer with improved juicing performance according to the present disclosure, FIG. 2 is a vertical cross-sectional diagram of FIG. 1, and FIG. 3 is an exploded perspective diagram of FIG. 1.

Hereinafter, in order to clearly understand the present disclosure, it will be described by defining the horizontal direction of FIG. 2 as a "longitudinal direction," the left direction of FIG. 2 as a rear side, the right direction thereof as a front side, the vertical direction of FIG. 2 as the top and the bottom, and the ground (paper) direction of FIG. 2 as a "width direction."

As illustrated in FIGS. 1 to 3, an embodiment of the juicer with improved juicing performance according to the present disclosure includes a drive part 100 and a juicing part 200.

The drive part 100 serves to drive the juicing part 200, and to provide a driving force to drive the juicing part 200 having the material such as a vegetable or a fruit (hereinafter, referred to as "juicing material") injected therein to grind and compress the juicing material, thereby extracting the juice. The juicing part 200 includes a substantial juicing space where the juicing material is injected and juiced at the same time and the remainder is discharged to the outside in the form of the sludge. The drive part 100 and the juicing part 200 may be firmly, detachably coupled by a fastening part 300 to be described later.

As illustrated in FIGS. 1 to 3, the drive part 100 may be configured to include a motor housing 110 having a motor 150 provided therein, having a first connecting part 130 of a hollow form protruded forwards and formed on the end portion thereof in the form of increasing in diameter toward the longitudinal front side and then decreasing again, a drive shaft 170 having one end portion connected to the motor 150 and having the other end portion protruded and rotated in the longitudinal direction through the first connecting part 130, and a driven shaft 190 provided to be protruded on the first connecting part 130 in parallel with the drive shaft 170. The drive shaft 170 may be connected to the motor 150 through a speed reducer not illustrated.

The front end portion of the first connecting part 130 has a structure occluded in the form in which the central portion has been protruded as a plate. The form in which the central portion has been protruded is a form in which portions of two circular arcs overlap each other in the width direction, the driven shaft 190 may be formed to be protruded from the circular arc central portion of the width directional one side, and the drive shaft 170 may penetrate the circular arc central portion of the width directional other side to be protruded therefrom.

As illustrated in FIGS. 1 to 3, the juicing part 200 may be composed of a roller part 280 rotatably connected to the drive part 100, and a main housing 200a of a hollow form accommodating the roller part 280 and coupled to the motor housing 110 of the drive part 100.

The roller part 280 may include a grinding roller part 250, and a juicing roller part 260 connected to the front of the grinding roller part 250 and extended to decrease in diameter forwards. The roller part 280 serves to grind the juicing material between the outer circumferential surface of the roller part 280 and the inner surface of the main housing 200a while being accommodated in the main housing 200a to rotate, and to transfer it while compressing and juicing it.

As illustrated in FIGS. 2 and 3, the grinding roller part 250 may have a grinding blade formed on the outer circumferential surface thereof, and include a first grinding roller 251 axially coupled to rotate integrally with the drive shaft 170 and a second grinding roller 255 rotatably coupled to the driven shaft 190.

The drive shaft 170 may have a spline form on the outer circumferential surface or a polygonal cross section, and may be formed with a concave groove having a polygonal cross section so that the drive shaft 170 may be inserted into the center of the rear end portion of the first grinding roller 251 or engaged with a spline.

The driven shaft 190 may be formed in a form having a circular cross section, and formed with a concave groove having a circular cross section so that the driven shaft 190 is inserted into and rotatably supported on the second grinding roller 255, and the second grinding roller 255 may be rotatably supported by the driven shaft 190 to do idling. The first grinding roller 251 and the second grinding roller 255 may have a protrusion protruded forwards or may be formed with a concave groove in the surface facing the front.

The grinding blades formed on the outer circumferential surfaces of the first grinding roller 251 and the second grinding roller 255 are provided in a gear form (preferably, a helical gear shape) to be engaged with each other, such that if the first grinding roller 251 coupled to the drive shaft 170 rotates integrally with the drive shaft 170, the second grinding roller 255 idling-rotatably coupled to the driven shaft 190 by the engaged grinding blade may also rotate together.

Further, the juicing material is transferred forwards by being grinded and juiced by the grinding blades engaged with each other to rotate. When viewed from the front to the rear in FIG. 3, the first grinding roller 251 inserted into the drive shaft 170 rotates counterclockwise, and the second grinding roller 255 rotates clockwise by the first grinding roller 251, such that the juicing material injected from the top toward the first grinding roller 251 and the second grinding roller 255 is transferred while being grinded by the grinding blades engaged with each other to rotate. At this time, the grinding blades formed on the outer circumferential surfaces of the first grinding roller 251 and the second grinding roller 255 and engaged with each other form an approximately 'V' form forwards when viewed from the top as a helical gear form, such that the injected juicing material is transferred forwards while being grinded by the grinding blade. A lead angle of the grinding blade is preferably formed to be smaller than 30° to be transferred forwards quickly while being grinded.

As illustrated in FIGS. 2 and 3, the juicing roller part 260 may include a first juicing roller 261 and a second juicing roller 265 having protrusions protruded in a spiral form on the outer circumferential surfaces thereof.

The first juicing roller 261 may be formed integrally at the front end of the first grinding roller 251, and the second juicing roller 265 may be formed integrally at the front end of the second grinding roller 255. As described above, in an embodiment of the juicer with improved juicing performance according to the present disclosure, the roller part of the juicing part 200 configured to substantially juice the juicing material may be provided in one gear composed of the first grinding roller 251 and the first juicing roller 261 and one gear composed of the second grinding roller 255 and the second juicing roller 265, that is, a double gear method including two gears.

Hereinafter, the fact that the first juicing roller 261 is coupled to the first grinding roller 251 to rotate integrally, and the second juicing roller 265 is coupled to the second grinding roller 255 to rotate integrally will be described.

Further, a configuration of the grinding roller part 250 and the juicing roller part 260 connected to the drive shaft 170 of the drive part 100 in the configuration of the roller part 280 will be referred to as a first gear roller 281, and a configuration of the grinding roller part 250 and the juicing roller part 260 connected to the driven shaft 190 of the drive part 100 in the configuration of the roller part 280 will be referred to as a second gear roller 282.

The first grinding roller 251 and the second grinding roller 255 may be provided with a protrusion protruded forwards, or concavely formed with a groove so that the first juicing roller 261 and the second juicing roller 265 are coupled to each other. The first juicing roller 261 and the second juicing roller 265 may be formed with grooves into which the protrusions provided in the first grinding roller 251 and the second grinding roller 255 are inserted, or provided with the protrusions inserted into the concave grooves formed on the fronts of the first grinding roller 251 and the second grinding roller 255 to be coupled to the first grinding roller 251 and the second grinding roller 255, respectively. At this time, the first grinding roller 251 and the first juicing roller 261, and the second grinding roller 255 and the second juicing roller 265 are coupled to be forcibly fitted, respectively, to rotate integrally. Of course, as described above, the first juicing roller 261 may also be formed integrally with the first grinding roller 251, and the second juicing roller 265 may also be formed with the second grinding roller 255.

As illustrated in FIGS. 2 and 3, the first juicing roller 261 and second juicing roller 265 of the juicing roller part 260 are formed in a tapered form in which an outer circumferential surface 266 decreases in diameter (outer diameter) forwards. A protrusion in a spiral form may be formed on each of the outer circumferential surfaces of the first juicing roller 261 and the second juicing roller 265.

Each of the front end portions of the first juicing roller 261 of the first gear roller 281 and the second juicing roller 265 of the second gear roller 282 is not formed with the above-described protrusion in the spiral form and may be further formed with an extension 264 including a step part 284 having a step surface with relatively decreased diameter formed thereon. The end portion of the extension 264 is rotatably supported by a support through hole (with no reference numeral) formed in an accommodating part 241 of a discharge housing 240 to be described later.

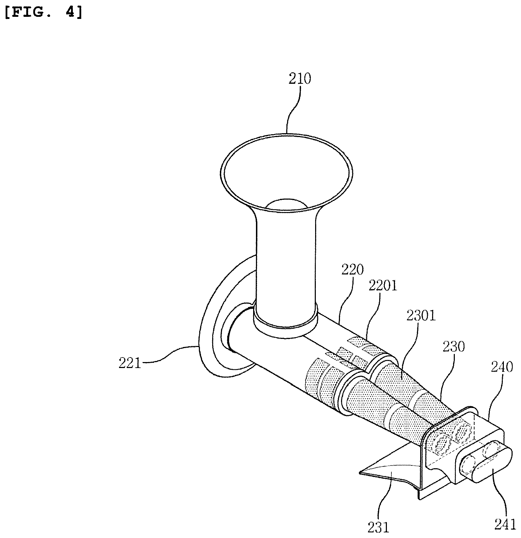

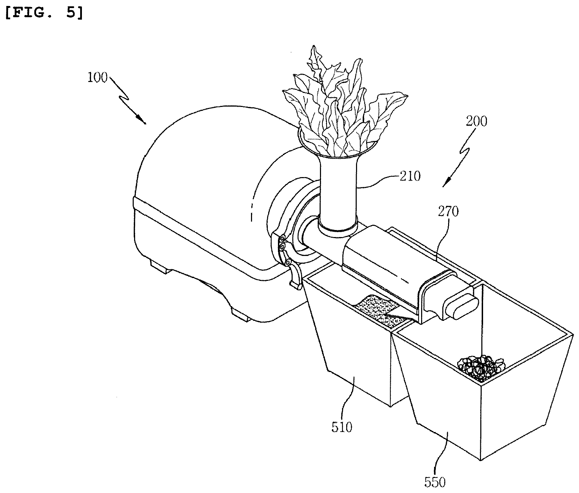

FIG. 4 is a perspective diagram illustrating a main housing in the configuration of FIG. 1, and FIG. 5 is an external perspective diagram illustrating a juicing figure using the juicer with improved juicing according to the present disclosure.

As illustrated in FIGS. 2 to 4, the main housing 200a may be composed of a grinding housing part 220 of a hollow form, and a juicing housing part 230 of a hollow form branched from the grinding housing part 220 and extended to be tapered to decrease in diameter forwards in the longitudinal direction.

The cross section of the grinding housing part 220 has a form in which portions of two circular arcs overlap each other so that the grinding blades of the first grinding roller 251 and the second grinding roller 255 may be inserted while being engaged with each other. A hopper part 210 of a hollow form, which is formed to extend upwards in order to inject the juicing material into the grinding housing part 220, may be provided above the grinding housing part 220, and the grinding housing part 220 of the portion provided with the hopper part 210 is formed with a through hole so that the hopper part 210 and the grinding housing part 220 may be communicated with each other.

As illustrated in FIG. 4, a first juicing hole 2201, which is a plurality of fine through holes, may be formed in the grinding housing part 220 in front of the hopper part 210.

When the juicing material is injected into the hopper part 210, the juicing material is transferred forwards while being grinded by the grinding blades of the first grinding roller 251 and the second grinding roller 255 rotating while being engaged with each other, and a portion of the juice flowing out from the juicing material while the juicing material is grinded may be first discharged through the first juicing hole 2201.

The juicing housing part 230 may be formed with a second juicing hole 2301, which is a plurality of fine through holes, and a plate-shaped juicing solution discharge guider 231 is positioned to be inclined downwards under the juicing housing part 230. The juicing solution discharge guider 231 is formed integrally in the discharge housing 240 to be described later, and serves to guide so that the juicing solution of the juicing material juiced from the juicing part 200 is discharged downwards.

As described above, the juicing material transferred forwards by the first grinding roller 251 and the second grinding roller 255 is discharged as a juicing solution primarily through the first juicing hole 2201, and the juicing material in which juicing has not been completed is discharged as a juicing solution secondarily through the second juicing hole 2301 while being transferred to the first juicing roller 261 and the second juicing roller 265 sides to be juiced.

As illustrated in FIGS. 3 and 4, the discharge housing 240 may be provided at the longitudinal end portion of the juicing housing part 230. One end portion (rear end portion) of the discharge housing 240 may be coupled to the juicing housing part 230, and the other end portion (front end portion) side thereof may be provided with the accommodating part 241. The accommodating part 241 is provided at a position spaced at a predetermined distance in the longitudinal direction apart from one end portion (rear end portion) of the discharge housing 240 coupled to the juicing housing part 230.

The extension 264 provided at any one end portion of the first juicing roller 261 and the second juicing roller 265 accommodated in the juicing housing part 230 extends to be protruded forwards from the end portion of the juicing housing part 230 and inserted into and supported on the accommodating part 241 through a portion of the discharge housing 240 coupled to the juicing housing part 230.

More specifically, the extension 264 provided at the end portion of the first juicing roller 261 of the first gear roller 281 and the second juicing roller 265 of the second gear roller 282, respectively, may be configured so that the first extension 264 of the first juicing roller 261 and the second extension 264 of the second juicing roller 265 are rotatably inserted into and supported in two support through holes provided in the accommodating part 241 in the width direction, respectively.

The discharge housing 240 may be formed with an opening downwards between one end portion coupled to the juicing housing part 230 and the accommodating part 241 so that the sludge, which is the residue of the juicing material after being juiced, is discharged. Hereinafter, it will be described by defining the direction in which the sludge is discharged as the longitudinal direction of the main housing 200a as 'discharge direction.'

As illustrated in FIGS. 4 and 5, the juicing solution discharge guider 231 is formed integrally with the discharge housing 240, as described above, and is formed to be inclined downwards to the rear coupled to the juicing housing part 230 and positioned under the juicing housing part 230. Therefore, a portion of the juice juiced from the juicing roller part 260 and discharged through the second juicing hole 2301 falls to the juicing solution discharge guider 231 to flow downwards.

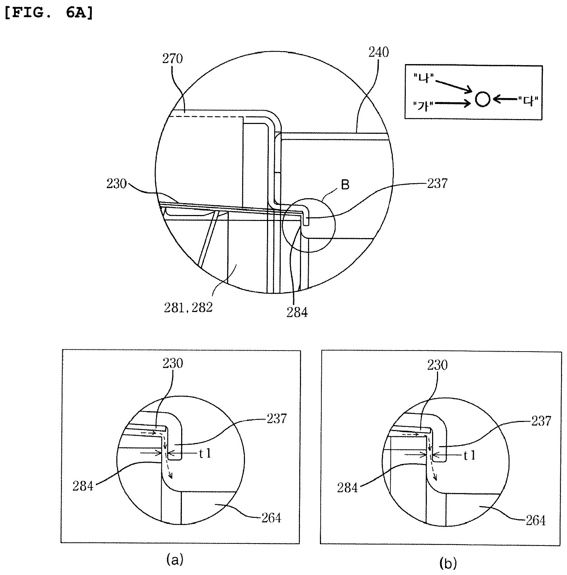

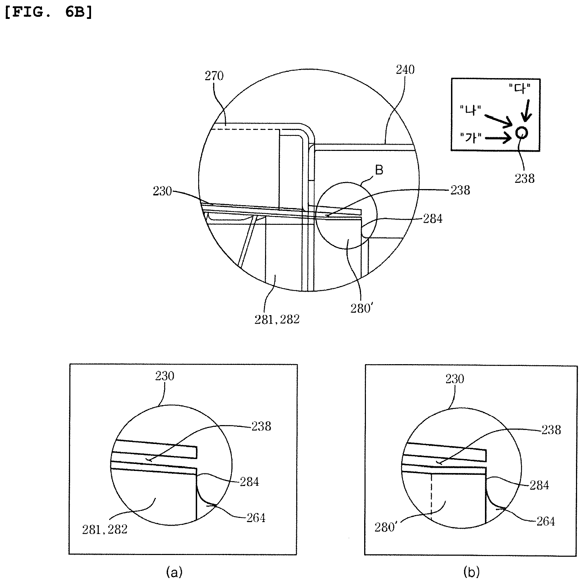

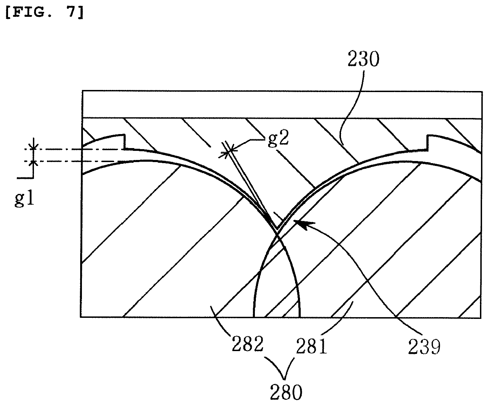

FIGS. 6A and 6B are enlarged cross-sectional diagrams of various embodiments illustrating a portion "A" in FIG. 2, respectively, and FIG. 7 is a portion of a front cross-sectional diagram of the portion "A" in FIG. 2.

An embodiment of the juicer with improved juicing performance according to the present disclosure may further include the sludge compressing force generating part, as illustrated in FIGS. 6A and 6B.

As illustrated in FIGS. 6A and 6B, the sludge compressing force generating part serves to generate different compressing forces on the sludge before finally discharging the juicing material transferred between the outer surface of the roller part 280 and the inner surface of the main housing 200a.

More specifically, as illustrated in FIG. 6A, the sludge compressing force generating part extends inwards in the radius direction from the end portion of the juicing housing part 230 in the configuration of the main housing 200a, and may include a compression circumferential plate 237 provided to cover a portion of the step surface of the step part 284 formed on the end portions of the first juicing roller 261 of the first gear roller 281 or the second gear roller 282 and the second juicing roller 265 of the second gear roller 282.

The compression circumferential plate 237 is a portion corresponding to the boundary surface with the extension 264 formed on the end portion of the first juicing roller 261 and/or the second juicing roller 265, and is a configuration provided to be spaced at a predetermined distance (t1) forwards apart from a portion of the step surface of the step part 284 formed to be stepped.

Therefore, the sludge before being discharged to the outside while the sludge, which is the residue of the juicing material in which the juicing has almost been completed by the mutual engagement driving of the first juicing roller 261 and/or the second juicing roller 265, is transferred forwards between them and the inner circumferential surface of the juicing housing part 230, may be discharged while being finally juiced through the spacing space between the compression circumferential plate 237 and the front end surface of the first gear roller 281 and/or the second gear roller 282.

As illustrated in FIG. 6A, the compression circumferential plate 237 is formed in all the circumferential directions along the step surface, which is a vertical surface of the step part 284 of the first gear roller 281 or the second gear roller 282. However, the compression circumferential plate 237 is not necessarily formed in all the circumferential directions along the step surface of the first gear roller 281 or the second gear roller 282, is designed variously according to the property of the compression material, and for example, may also be formed at a plurality of places to be spaced apart from a portion of the circumferential direction along the step surface of the step part 284 of the first gear roller 281 or the second gear roller 282.

The sludge compressing force generating part implemented by the compression circumferential plate 237 may improve the juicing rate at the time of juicing the juicing material that is much in fiber relatively. That is, it is possible to adjust the spacing distance (t1) between itself and the step surface of the first gear roller 281, or to adjust the number of formations along the circumference of the step surface of the first gear roller 281 to suppress the discharge of the sludge temporarily, thereby largely improving the juicing rate inside the juicing housing part 230.

As illustrated in FIG. 6A, this is because the compression circumferential plate 237 represented by " 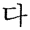 " with respect to the discharge force for the discharge direction of the sludge represented by " 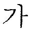 " and the discharge force for the sludge by the protrusion of the spiral form represented by " 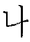 " compresses the sludge of the juicing material, which is much in fiber, by forming a strong compressing force, thereby further juicing the juice remaining in the sludge.

Meanwhile, as illustrated in FIGS. 6A and 6B, the sludge compressing force generating part may further include a compression space part 238 provided in a compression space form, which is a space between the outer circumferential surface of the first gear roller 281 or the second gear roller 282 and the juicing housing part 230 of the main housing 200a.

As illustrated in FIGS. 6A(B) and 6B(B), the compression space part 238 may be provided in a form in which the compression space decreases, and as illustrated in FIGS. 6A(A) and 6B(A), the compression space itself does not decrease, but the compression space part 238 may be provided in a form in which the compressing force increases due to the addition of the discharge force to the sludge by the protrusions of the spiral form of the first gear roller 281 and the second gear roller 282.

In particular, as illustrated in FIGS. 6A(B) and 6B(B), if the compression space is provided in a form in which the compression space decreases, the compression space part 238 may also be provided to be formed to have the same outer diameter from one point to the step part 284 as the end portion of the first gear roller 281 or the second gear roller 282, thereby decreasing the compression space of the front end of the first gear roller 281 or the second gear roller 282.

More specifically, as illustrated in FIGS. 6A(B) and 6B(B), the compression space part 238 may be formed between the same outer diameter circumferential surface 280' having the same outer diameter of the first gear roller 281 or the second gear roller 282 and the front end of the juicing housing part 230 of the main housing 200a.

Since the front end portion of the juicing housing part 230 is provided in a tapered form in which the inner diameter decreases gradually toward the discharge direction of the sludge, the compression space part 238 described above, in which the compression space decreases gradually, may be formed, if the same outer diameter circumferential surface 280' having the same outer diameter is formed in a state where the outer diameter decreases in a tapered form so that the first gear roller 281 or the second gear roller 282 has the same spacing distance with the inner surface of the juicing housing part 230.

Here, if the above-described compression circumferential plate 237 has been constructed through the modified design of the main housing 200a, the compression space part 238 may be defined as being constructed through the modified design of the first gear roller 281 or the second gear roller 282.

The compression space part 238 is formed to be open in the discharge direction of the sludge, the step surface of the step part 284 and the front end of the main housing 200a (in particular, the front end of the juicing housing part 230) are positioned on the same vertical line, and the compression space part 238 is preferably designed so that the mutual spacing distance is the smallest at its portion.

Therefore, as illustrated in FIG. 6B, since the sludge discharged through the compression space part 238 is influenced by only the resistance due to the inner surface of the front end side of the main housing 200a represented by " 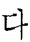 " with respect to the discharge force for the discharge direction of the sludge represented by " 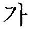 " and the discharge force of the sludge by the protrusion of the spiral form represented by " 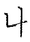 ", it is advantageous for the residual juicing of the sludge of the juicing material which is relatively less in fiber.

As the implementation example of the sludge compressing force generating part illustrated in FIGS. 6A and 6B, the compression circumferential plate 237 is formed only on the first gear roller 281 and the compression space part 238 is formed only on the second gear roller 282, and it is also possible to be formed in reverse.

Furthermore, the compression circumferential plate 237 and the compression space part 238 may be formed only on the first gear roller 281 and may not be formed on the second gear roller 282, and it is also possible to be formed in reverse.

Further, both the compression circumferential plate 237 and the compression space part 238 may also be provided in both the first gear roller 281 and the second gear roller 282.

According to the amount of fiber of the juicing material that the consumer wants to use normally, as described above, since the roller part 280 and the main housing 200a designed in various forms may be optionally adopted and replaced, it is possible to improve the juicing performance indirectly or directly.

Meanwhile, as illustrated in FIG. 7, the sludge compressing force generating part is formed on the inner surface of the main housing 200a, and may include a compression converging part 239 for decreasing the space with the outer circumferential surfaces of the first gear roller and the second gear roller toward the engaged portion of the first gear roller 281 and the second gear roller 282.

More specifically, as illustrated in FIG. 7, the compression converging part 239 may be a concept that refers to all the surfaces or spaces in which the gap therebetween decreases gradually from g1 to g2 as it is closer to the range in which the first gear roller 281 and the second gear roller 282 are engaged and overlapped with each other.

In particular, the compression converging part 239 is designed to be formed inside the juicing housing part 230, which is close to the end portion sides of the first gear roller 281 and the second gear roller 282 to juice the portion of the sludge of the juicing material remaining without being juiced together with the compression circumferential plate 237 and the compression vertical plate 238, thereby achieving a higher juicing rate.

As described above, an embodiment of the juicer with improved juicing performance according to the present disclosure has been described in detail with reference to the accompanying drawings. However, the embodiment of the present disclosure is not necessarily limited to the above-described embodiment, and it is natural that various modifications and equivalents thereof may be made by those skilled in the art to which the present disclosure pertains. Therefore, the true scope of the present disclosure will be defined by the claims to be described later.

## Claims

1. A juicer with improved juicing performance, comprising:
a drive part provided inside a motor housing;
a roller part detachably coupled to extend forwards from the motor housing, and provided to be rotatably driven by a driving force delivered from the drive unit therein; and
a sludge compressing force generating part for generating different compressing forces on a sludge before finally discharging a juicing material transferred between the outer surface of the roller part and the inner surface of the main housing.

2. The juicer with improved juicing performance of claim 1,
wherein the sludge compressing force generating part is provided on the end portion of the main housing, and provided to be formed in the edge direction of a step part formed to be stepped in a space with an extension protruded from the front end portion of the roller part to operate as the resistance against a transferring force of the sludge.

3. The juicer with improved juicing performance of claim 2,
wherein the roller part comprises a first gear roller connected to a drive shaft of the drive part and decreasing in outer diameter gradually toward the discharge direction of the sludge; and a second gear roller connected to a driven shaft of the drive part and decreasing in outer diameter gradually toward the discharge direction of the sludge, and
wherein the sludge compressing force generating part comprises any one of
a compression circumferential plate extending from the main housing, and provided to cover a portion of a step surface formed by the step part of the first gear roller or the second gear roller; and
a compression space part provided in a compression space form between the end portion of the first gear roller or the second gear roller and the main housing.

4. The juicer with improved juicing performance of claim 3,
wherein the compression circumferential plate is formed in all the circumferential directions along the step surface of the step part of the first gear roller or the second gear roller.

5. The juicer with improved juicing performance of claim 3,
wherein the compression circumferential plate is formed on a plurality of places to be spaced apart from a portion of the circumferential direction along the step surface of the step part of the first gear roller or the second gear roller.

6. The juicer with improved juicing performance of claim 3,
wherein the compression space part is formed between the circumferential surface of the first gear roller or the second gear roller and the front end of the main housing, and
wherein the step surface of the step part and the front end of the main housing are positioned on the same vertical line to decrease the compression space and the mutual spacing distance is the smallest.

7. The juicer with improved juicing performance of claim 3,
wherein the compression space part is formed between the circumferential surface of the first gear roller or the second gear roller and the front end of the main housing, and
is formed to have the same outer diameter from one point of the end portion of the first gear roller or the second gear roller to the step part to decrease the compression space.

8. The juicer with improved juicing performance of claim 6 or claim 7,
wherein the compression space part is open in the discharge direction of the sludge.

9. The juicer with improved juicing performance of claim 2,
wherein the resistance against the discharge direction of the sludge of the compression circumferential plate is set to be greater than the compression space part.

10. The juicer with improved juicing performance of claim 2,
wherein the compression circumferential plate is provided on both the first gear roller and the second gear roller, and
wherein the compression space part is provided on both the first gear roller and the second gear roller.

11. The juicer with improved juicing performance of claim 1,
wherein the main housing is provided to surround the first gear roller connected to the drive shaft of the drive part and the second gear roller connected to the driven shaft of the drive part in the configuration of the roller part, and
wherein the sludge compressing force generating part comprises a compression converging part formed on the inner surface of the main housing, and for decreasing a space with the outer circumferential surfaces of the first gear roller and the second gear roller toward the engaged portion of the first gear roller and the second gear roller.
